Europäisches Patentamt

European Patent Office

Office européen des brevets

(19)

(11) Numéro de publication: **0 141 759**
A1

# (12) DEMANDE DE BREVET EUROPEEN

(21) Numéro de dépôt: 84420152.5

(22) Date de dépôt: **17.09.84**

(51) Int. Cl.⁴: **D 06 L 3/02**, C 11 D 3/39,
C 01 B 15/017

(30) Priorité: **20.09.83 FR 8314913**

(43) Date de publication de la demande: **15.05.85**
**Bulletin 85/20**

(84) Etats contractants désignés: **BE CH DE FR GB IT LI**

(71) Demandeur: **ATOCHEM, 12/16, allée des Vosges,**
**F-92400 Courbevoie (FR)**

(72) Inventeur: **Dubreux, Bernard, "Le Grillon" - Tour E**
**Chemin de Chantegrillet, F-69340 Francheville-Le-Bas**
**(FR)**
**Inventeur: Schirmann, Jean-Pierre, 49 Chemin de la**
**Glacière, F-69600 Oullins (FR)**

(54) Formulations fluides détergentes à action blanchissante pour textiles stables au stockage et leur procédé d'obtention.

(57) Formulations fluides détergentes à action blanchissante pour textiles stables au stockage contenant, à l'état anhydre, du peroxyde d'hydrogène et des ingrédients habituels des bains lixiviels autres que les persels et peroxyhydrates, et procédé de préparation de ces formulations.

EP 0 141 759 A1

FORMULATIONS FLUIDES DETERGENTES A ACTION BLANCHISSANTE
POUR TEXTILES STABLES AU STOCKAGE ET LEUR PROCEDE D'OBTENTION

1

La présente invention concerne des formulations fluides détergentes à action blanchissante stables au stockage, convenant au blanchiment textile en bain alcalin. Plus particulièrement, l'invention concerne de telles formulations se présentant sous forme d'une suspension d'une phase solide dans une phase liquide comprenant des agents tensio-actifs, du peroxyde d'hydrogène et éventuellement un ou plusieurs solvants.

L'utilisation du peroxyde d'hydrogène comme agent de blanchiment textile est connue depuis longtemps : le peroxyde d'hydrogène, peu stable dans les milieux alcalins, libère son oxygène pour produire une action de blanchiment. Mais cette propriété est aussi un inconvénient si l'on désire obtenir une formulation complète de détergent à action blanchissante en bain alcalin car alors l'oxygène actif n'est pas stable au stockage, principalement dans les formulations fluides. Pour pallier cet inconvénient on a proposé et mis en oeuvre depuis longtemps des combinaisons du peroxyde d'hydrogène avec différents composés susceptibles de relibérer ce dernier au moment du lavage. Les persels et les peroxyhydrates tels que par exemple le perborate de sodium, le percarbonate de sodium, le peroxyhydrate d'urée .... etc., répondent à cet objectif et peuvent être inclus dans différentes formulations solides ou liquides avec une amélioration de la stabilité de l'oxygène actif. Toutefois ces persels et peroxyhydrates obligent à introduire dans la formule, en plus du peroxyde d'hydrogène, un support de poids moléculaire élevé et le plus souvent sans action détergente.

La demanderesse vient de découvrir d'une façon surprenante que l'on pouvait inclure le peroxyde d'hydrogène dans des formulations fluides convenant au blanchiment textile en bain alcalin ne contenant ni persels, ni peroxyhydrates à la condition que le peroxyde d'hydrogène lui-même et les autres ingrédients soient à l'état anhydre.

Pour réaliser les formulations conformes à la présente invention on peut constituer les deux phases liquide et solide en mélangeant le peroxyde d'hydrogène et les autres ingrédients en toutes proportions et dans n'importe quel ordre.

Le peroxyde d'hydrogène peut être utilisé soit directement sous forme anhydre, soit de préférence sous forme d'une solution anhydre dans un solvant organique choisi préférentiellement parmi les alcools primaires, secondaires ou tertiaires et les polyethers dérivés de l'éthylène-glycol ou du propylène-glycol, solvants qui constituent alors ou qui peuvent constituer en eux-mêmes des ingrédients des formulations selon l'invention.

Comme ingrédients présents dans la phase liquide des formulations selon l'invention, conviennent, d'une manière générale, tous ceux qui, compatibles avec une formule de détergent, sont liquides ou liquifiés en présence des autres constituants de la phase liquide. La proportion de phase liquide pourra aisément être déterminée par l'homme de l'art en fonction de la fluidité désirée. Pour réaliser les formulations conformes à la présente invention on pourra mettre en oeuvre d'une manière générale tous les ingrédients qui conviennent pour réaliser une formule reconnue performante par l'homme de l'art dans la mesure où ces ingrédients sont introduits à l'état anhydre et mélangés en l'absence d'eau. Sont donc exclus de l'invention tous les ingrédients qui ne peuvent être obtenus anhydres sans altération irréversible ainsi que les mélanges d'ingrédients conduisant à la formation d'eau à des températures inférieures à environ 70°C.

De la même manière les conditions nécessaires au maintien en suspension des différents ingrédients solides dans la phase liquide seront déterminées aisément par l'homme de l'art en fonction de la viscosité de la phase liquide, de la densité du solide et de sa granulométrie. Toutefois le maintien en suspension de la phase solide assurant l'homogénéité du mélange n'est pas une condition impérative et l'on pourra, sans sortir du cadre de l'invention, exécuter des mélanges non homogènes que l'utilisateur in fine devra naturellement agiter avant de mettre en oeuvre.

Les formulations de la présente invention sont aussi stables que celles contenant la même quantité de peroxyde d'hydrogène sous forme d'un persel, par exemple de percarbonate de sodium, et elles présentent l'avantage par rapport à ces dernières de ne pas comporter de charge ou porteur inutile, tel que le carbonate de sodium dans le percarbonate de sodium.

Les exemples suivants illustrent l'invention sans la limiter

EXEMPLES 1 à 4

Produits mis en œuvre :

#### Surfactants

$S_1$ : produit de condensation huile de tall 1 part, oxyde d'éthylène 1,6 part.

$S_2$ : dodécylphénol condensé avec dix moles d'oxyde d'éthylène.

Solvants - peroxyde d'hydrogène : préparés par élimination azéotropique de l'eau à partir du solvant et du peroxyde d'hydrogène 70 %.

$S_3$ : butanol primaire normal 85 parts - peroxyde d'hydrogène 15 parts.

$S_4$ : butanol secondaire 90 parts - peroxyde d'hydrogène 10 parts.

#### Phase solide

Tripolyphosphate de sodium       TPP

Laurate de sodium                LS.

Sulfate de sodium                SS

| Formulations | A (Ex.1) | B (Ex.2) | C (Ex.3) | D (Ex.4) |
|---|---|---|---|---|
| $S_1$ | 12 | 0 | 11 | 0 |
| $S_2$ | 0 | 12 | 0 | 11 |
| $S_3$ | 28 | 28 | 0 | 0 |
| $S_4$ | 0 | 0 | 30 | 30 |
| TPP | 45 | 45 | 46 | 46 |
| LS | 8 | 8 | 7 | 7 |
| SS | 7 | 7 | 6 | 6 |

Les mêmes formulations ont été additionnées d'eau à raison de 1 % par rapport à la formule donnant ainsi les formules A' B' C' D'

Les huit formulations ont ensuite été soumises à un test de stockage accéléré réalisé de la façon suivante :

150 g de mélange homogénéisé ont été placés dans un réacteu à fond plat de 250 ml équipé d'un réfrigérant ascendant et d'un dispo tif d'agitation. Le mélange agité a été porté à 65°C et maintenu à

4

cette température pendant une durée de 8 heures. A intervalles réguliers l'oxygène actif a été dosé.

Les résultats obtenus sont les suivants : dans les formules A B C D l'oxygène actif est encore présent à 100 % alors qu'il a totalement disparu après quelques minutes de palier à 65°C dans les formules A' B' C' D'.

EXEMPLE 5 (comparatif)

On a préparé la formulation E suivante :

| Formulation | E (Ex. 5) |
|---|---|
| $S_1$ | 11 |
| $S_2$ | 0 |
| butanol secondaire | 20,7 |
| percarbonate de Na | 9,3 |
| TPP | 46 |
| LS | 7 |
| SS | 6 |

La formulation E contient la même teneur en oxygène actif que la formulation C, mais sous forme de percarbonate de sodium au lieu de peroxyde d'hydrogène.

La formulation C s'avère aussi performante que la formulation E tout en présentant l'avantage de ne pas comporter inutilement de "porteur" de peroxyde d'hydrogène, tel que le carbonate de sodium dans le percarbonate de sodium.

REVENDICATIONS

1.      Formulations fluides détergentes à action blanchissante pour textiles stables au stockage caractérisées en ce qu'elles contiennent, à l'état anhydre, du peroxyde d'hydrogène et des ingrédients habituels des bains lixiviels autres que les persels et peroxyhydrates.

2.      Formulations selon la revendication 1 caractérisées en ce que des solvants organiques anhydres choisis parmi les alcools primaires, secondaires ou tertiaires et les polyethers dérivés de l'éthylène-glycol ou du propylène-glycol constituent des ingrédients.

3.      Procédé de préparation des formulations selon la revendication 1 caractérisé en ce que le peroxyde d'hydrogène et les ingrédients sont mélangés à l'état anhydre.

4.      Procédé selon la revendication 3 caractérisé en ce que le peroxyde d'hydrogène est mis en oeuvre sous forme d'une solution anhydre dans un solvant organique choisi parmi les alcools primaires, secondaires ou tertiaires et les polyéthers dérivés de l'éthylène-glycol ou du propylène-glycol.

Office européen
des brevets

**RAPPORT DE RECHERCHE EUROPEENNE**

0141759
Numéro de la demande

EP  84 42 0152

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| Y | FR-A-2 145 400  (L'AIR LIQUIDE)<br>* exemple 1 et revendications * | 1-4 | D 06 L    3/02<br>C 11 D    3/39<br>C 01 B   15/01 |
| Y | FR-A-2 145 644  (MO OCH DOMSJO AB)<br>* en entier * | 1-4 | |
| Y | CHEMICAL ABSTRACTS, vol. 98, no. 4, janvier 1983, page 66, no. 18019w, Columbus, Ohio, US; K.K. SONU et al.: "Organic solvent bleaching with hydrogen peroxide" & COLOURAGE 1982, 29(19), 9-11<br>* abrégé * | 1 | |
| Y | US-A-3 925 008  (S. MAKINO et al.)<br>* revendications * | 1 | **DOMAINES TECHNIQUES RECHERCHES (Int. Cl.4)** |
| A | DE-B-1 262 982  (BAYER) | | C 01 B<br>D 06 L<br>C 11 D |

Le présent rapport de recherche a été établi pour toutes les revendications

| Lieu de la recherche<br>LA HAYE | Date d'achèvement de la recherche<br>27-12-1984 | Examinateur<br>GOLLER P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82